# EUROPÄISCHE PATENTSCHRIFT

(11) **EP 3 162 321 B1**
(45) Veröffentlichungstag und Bekanntmachung des Hinweises auf die Patenterteilung: **24.04.2019**
(21) Anmeldenummer: 16194947.4
(22) Anmeldetag: 21.10.2016
(51) Int. Cl.: A61C 5/00, A61C 7/08

(54) **RETAINER**
RETAINER
RETAINER

(30) Priorität: 27.10.2015 DE 102015118323
(43) Veröffentlichungstag der Anmeldung: 03.05.2017
(73) Patentinhaber: Neurodontics-Stiftung, 31832 Springe (DE)
(72) Erfinder: Entrup, Wilhelm, Dr., 30159 Hannover (DE)
(74) Vertreter: Otten, Roth, Dobler & Partner mbB Patentanwälte

(56) Entgegenhaltungen:
- DE-A1- 4 440 810
- FR-A1- 3 005 405
- US-A- 4 533 320
- US-A- 4 659 310
- US-A1- 2006 078 849
- US-A1- 2008 057 460

## Beschreibung

Die Erfindung betrifft einen Retainer zur Korrektur und/oder zum Erhalt der während der kieferorthopädischen Therapie erzielten Zahnstellung nach dem Oberbegriff des Anspruchs 1.

Aus dem Stand der Technik sind herausnehmbare wie auch festsitzende Vorrichtungen bekannt, welche an den Zähnen passiv anliegen, die Zähne miteinander verbinden und im Rahmen ihrer vorgegebenen Form die Bewegungsmöglichkeiten der Zähne limitieren. Diese Vorrichtungen werden zum Zweck eingesetzt, im Anschluss an eine aktive kieferorthopädische Therapie die erzielte Zahnstellung zu fixieren, und um somit zu verhindern, dass die Zahnstellung sich wieder in Richtung des Ausgangsbefundes verändert oder eine sonstige Malokklusion eintritt.

Aus der DE 20 2012 004 419 U1 ist ein Retainer zur Stabilisierung und zum Dauerhaftmachen einer Zahnkorrektur bekannt, wobei der dazu verwendete Retainerdraht an den Zähnen festgeklebt wird. Aus der WO 2007/014616A1 wiederum ist ein Retainer bekannt, bei dem ebenfalls ein Spannelement mit den Zähnen verklebt wird, das jedoch zur kieferorthopädischen Behandlung von Zähnen Einsatz findet. Ebenfalls zur Durchführung einer Zahnbehandlung ist aus der DE 601 002 36 T2 eine kieferorthopädische Vorrichtung bekannt, mit der die Korrektur und somit die Behandlung durch Ausübung einer Drängkraft erreicht wird.

Ferner ist aus dem Stand der Technik aus der US 2008/005 7460 A1 ein fixiertes Retainer-System bekannt, bei dem die Zähne, deren Stellung nach einer Behandlung erhalten bleiben soll, mit Verbindungsankern jeweils versehen werden, durch die ein Metalldraht geführt wird, wobei die Endabschnitte des Drahtes mit den entsprechenden endständigen Verbindungsstücken fest verbunden werden.

Aufgabe der Erfindung ist es, einen Retainer bereitstellen zu können, bei dem der Körper nicht gezwungen ist, die ihm nach einer aktiven Zahnbehandlung zugefügten starren Zwangsbedingungen im Nachhinein durch Kompensationen wie zum Beispiel posturale Kompensationen ausgleichen zu müssen.

Die Aufgabe wird, ausgehend von einem Retainer beziehungsweise einem Herstellungsverfahren der eingangs genannten Art, durch die kennzeichnenden Merkmale des Anspruchs 1 gelöst.

Durch die in den abhängigen Ansprüchen genannten Maßnahmen sind vorteilhafte Ausführungen und Weiterbildungen der Erfindung möglich.

Der erfindungsgemäße Retainer ist zur Korrektur, insbesondere aber zum Erhalt der während der kieferorthopädischen Therapie erzielten Zahnstellung, insbesondere der Frontzahnstellung ausgebildet. Der Retainer weist wenigstens zwei Verbindungsstücke zur Befestigung des Retainers an jeweils einen der Zähne sowie einen Verbindungsdraht zur Herstellung der Verbindung zwischen den Zähnen beziehungsweise zur Ausbildung einer Zwangsbedingung zur Einschränkung der Bewegungsmöglichkeiten der verbundenen Zähne auf. Die jeweiligen Verbindungsstücke bilden jeweils Halte- oder Verankerungspunkte auf den einzelnen Zähnen, um den Verbindungsdraht, der eine Verbindung von einem zum nächsten Zahn schafft, zu halten. Durch diese Verbindung werden Zwangsbedingungen geschaffen, d.h. die Bewegungsmöglichkeiten der Zähne werden grundsätzlich eingeschränkt.

Nunmehr zeichnet sich der erfindungsgemäße Retainer dadurch aus, dass der Verbindungsdraht in wenigstens einem der Verbindungsstücke beweglich gelagert ist. Mittels dieser beweglichen Lagerung wird die Bewegungsmöglichkeit der retinierten Zähne gegenüber einer herkömmlichen, völlig starren Fixierung, wie sie bislang nach dem Stand der Technik üblich war, vergrößert. Entgegen der bisherigen Fachmeinung hat es sich herausgestellt, dass es nicht notwendig ist, im Zusammenhang mit Retainer eine völlig starre Fixierung, etwa durch mehrfach verseilte Edelstahldrähte, kieferorthopädische Kantdrähte oder Nickel-Titan-Drähte zu erreichen. Eine solche, absolut starre Fixierung, die dem Zahn keine Bewegungsmöglichkeit mehr bietet, kann dazu führen, dass diese Zwangsmaßnahme durch neurologische und muskuläre Kompensationen des Körpers ausgeglichen werden muss.

Die knöchernen Anteile des Oberkiefers (Maxilla) sind über Suturen (bindegewebsartige Nahtstellen zwischen den Knochen) miteinander verbunden. Auch nach der physiologischen Verknöcherung dieser Suturen findet eine physiologische Verbiegung zwischen den Anteilen der Maxilla statt. Dieses Verbiegungssystem der Schädelknochen ist Grundlage für die Gesundheit des Kraniomandibulären Systems (Abkürzung: CMS). Das CMS ist neurologisch mit der Halswirbelsäule und insbesondere der Dura mater mit dem Kraniosakralen System verbunden und beeinflusst dieses maßgeblich. Somit kann das Ausbleiben der genannten Verbiegungs- oder Bewegungsmöglichkeiten zu posturalen Kompensationen führen. Die Bewegungsmöglichkeiten dieser Strukturen werden jedoch maßgeblich durch die Zähne beeinflusst, da diese wiederum über die parodontalen Fasern des Parodontiums eng mit dem Knochen verbunden sind. Eine zu starre Verbindung der Zähne durch zahnärztliche / kieferorthopädische Maßnahmen, insbesondere durch entsprechende Retainer verhindert diese Mobilität.

Darüber hinaus unterliegt der Unterkiefer während der Öffnungs- und Schließbewegung, während des Kauvorgangs sowie während der Atmung einer physiologischen Flexion und Torsion. Diese Torsionsfähigkeit der genannten Strukturen wird ebenfalls durch die Zähne beeinflusst, da sie über die parodontalen Fasern des Parodontiums wiederum eng mit dem Knochen verbunden sind. Auch hier kann sich eine zu starre Verbindung wiederum entsprechend negativ auf die genannten Torsionsmöglichkeiten auswirken. Derartige Zwangsmaßnahmen durch einen solchen Retainer können allenfalls kaufunktionell durch vom Körper eigens induzierte Kompensationen ausgeglichen werden. Im Falle einer Überschreitung eines individuellen Schwellenwertes mit Dekompensation, der von Patient zu Patient verschieden sein kann (mit iatrogen bedingten Symptomen wie Cephalgie, HWS-BWS-LWS-Beschwerden, Schulter-Arm-Syndrom, Parästhesien im Bereich der Extremitäten oder andere Wirbelsäulensyndrome) können Kompensationsreaktionen im Körper auftreten, die die o.a. Nebenwirkungen eines zu starren Retainers beschreiben würden.

Zudem ist zu beachten, dass die erforderliche Verbleibdauer eines derartigen Retainers im Mund des Patienten zwar je nach Behandlungsfall sehr stark variieren kann, regelmäßig aber von einer Verbleibdauer von mindestens 5 Jahren nach Behandlungsabschluss auszugehen ist. Ein zu starrer Retainer, wie er aus dem Stand der Technik bekannt ist, stellt also einen störenden, iatrogenen Eingriff dar, dessen gesundheitliche Folgen und Nebenwirkungen somit verhindert, mindestens aber abgeschwächt werden können.

Bei einer Ausführungsform der Erfindung ist der Verbindungsdraht in Längsrichtung im Wesentlichen starr ausgebildet beziehungsweise kann insbesondere ein Elastizitätsmodul von mindestens 1000 MPa (Megapascal), vorzugsweise mindestens 3000 MPa aufweisen. Aufgrund dessen ist der Verbindungsdraht in Längsrichtung hier kaum ausdehnbar. Eine (elastische) Streckung des Drahtes in Längsrichtung ist daher kaum möglich. Sind einzelne Punkte an Verbindungsstücken fest mit dem Draht verbunden, so können diese in Richtung der Längserstreckung des Drahtes sich nicht weiter voneinander entfernen. Eine Relativbewegung zwischen Zähnen und Draht ist allenfalls, je nach Ausbildung des Drahtes quer zu dessen Längserstreckung möglich, wenn der Draht entsprechende Eigenschaften aufweist oder aber die Zähne können eine Relativbewegung zueinander ausführen, sofern es die bewegliche Lagerung des Verbindungsdrahtes in den entsprechenden Verbindungsstücken zulässt.

Insbesondere kann bei einer Ausführungsform der Erfindung der Verbindungsdraht senkrecht zur Längsrichtung biegeschlaff ausgebildet sein, d.h. eine Biegung in dieser Richtung ist ohne großen Kraftaufwand möglich. Gegebenenfalls kann der Draht auch in der sodann erreichten Position verharren beziehungsweise durch eine entsprechende Kraft wieder in die Ausgangsform zurückgebracht werden. Je nachdem, wie der Draht ausgestaltet ist und in welcher Richtung die bewegliche Lagerung möglich ist, können auch die Zwangsbedingungen, die in Bezug auf die Bewegungsmöglichkeiten der Zähne noch bestehen, verändert werden. Erfindungsgemäß umgibt wenigstens eines der Verbindungsstücke den Verbindungsdraht senkrecht zur Längsrichtung des Verbindungsdrahtes, und zwar wenigstens teilweise, insbesondere aber vollständig. Darüber hinaus ist es denkbar, dass das Verbindungsstück vollständig am Verbindungsdraht entlang dessen Umfang anliegt. Durch diese Maßnahme wird vorzugsweise eine Relativbewegung zwischen dem Verbindungsdraht und dem jeweiligen Verbindungsstück in Längsrichtung ermöglicht. Eine Relativbewegung senkrecht zur Längsrichtung wird nur innerhalb einer bestimmten Fläche zugelassen, was zum Beispiel davon abhängt, ob der Verbindungsdraht in einer Öse des Verbindungsstücks geführt ist, deren Querschnitt ähnlich groß ist, wie beim Verbindungsdraht beziehungsweise wieviel Spiel hier gelassen wird. Ist die Öse so ausgebildet, dass der Verbindungsdraht praktisch ohne Spiel gelagert ist, so ist eine Bewegung senkrecht zur Längsachse des Verbindungsdrahtes praktisch unterbunden. Wird hingegen eine Lagerung mit viel Spiel bereitgestellt, ist auch innerhalb der entsprechenden Querschnittsfläche der Öse eine Bewegung möglich.

Bei Ausführungsbeispielen der Erfindung kann auch der Draht beziehungsweise die Lagerungsöse des Verbindungsstücks eine bestimmte Querschnittsform aufweisen. Beispielsweise kann es sich um, im einfachsten Fall, einen runden Querschnitt handeln, denkbar ist aber auch ein ovaler Querschnitt des Drahtes. Durch einen ovalen Querschnitt kann verhindert werden, dass sich der Draht innerhalb der Lagerungsöse um die eigene Achse dreht. Die ovale Form kann, je nachdem, wieviel Spiel in der Lagerungsöse des Verbindungsstück bereitgestellt wird dazu führen, dass eine Drehbewegung um die Längsachse nur eingeschränkt oder gar nicht möglich ist. Durch diese Lagerungsmöglichkeit wird insgesamt eine erhöhte Bewegungsmöglichkeit der Zähne innerhalb des Retainergefüges ermöglicht. Entlang der Längsachse des Drahtes, also entlang der Krümmung des Ober- beziehungsweise Unterkiefers können sich zwei Zähne relativ zueinander bewegen, soweit sie sich nicht gegenseitig (etwa durch die jeweilige Zahnkrone) selbst blockieren. Eine Bewegung der Zähne ist innerhalb der natürlichen Zahnbeweglichkeit von 0,2 mm in allen drei Raumrichtungen erhalten/gegeben. Eine völlig freie Bewegung ist aber durch den Halt des Verbindungsdrahtes auch nicht mehr möglich.

Erfindungsgemäß ist der Verbindungsdraht wenigstens teilweise beziehungsweise vollständig aus Kunststoff, und zwar aus Polyetheretherketon (Abkürzung: PEEK) gefertigt. Ein vollständiger Verzicht auf metallische Bauteile beziehungsweise Materialien ermöglicht ein besonders hohes Maß an Biokompatibilität. Darüber hinaus kann eine ästhetische Verbesserung erreicht werden, weil metallische Bauteile in der Regel auch einen metallischen Glanz aufweisen und sich optisch daher deutlich vom natürlichen Zahnmaterial abheben. Herkömmliche Retainer aus Metall sind daher oftmals gut sichtbar und treten in den Augen des Betrachters wie ein störendes Objekt hervor. Im Übrigen zeichnet sich PEEK als Kunststoffmaterial zusätzlich durch eine hohe Hitzestabilität aus.

Durch die Verwendung von Kunststoff, insbesondere eines Draht aus PEEK können allergische Reaktionen bei Patienten mit entsprechender allergologischer Disposition, die insbesondere auch bei Edelstall auftreten kann, vermieden werden. Das metallisch-starre Erscheinungsbild eines herkömmlichen Retainers, wie aus dem Stand der Technik bekannt ist, wird oftmals von einigen Patienten sogar abgelehnt, sodass diese auf eine entsprechende Behandlung verzichten und stattdessen eher gesundheitliche Nachteile in Kauf nehmen. Für diese Patienten wird daher durch diese Erfindung eine neuartige Option geboten.

Darüber hinaus ist erfindungsgemäß wenigstens eines der Verbindungsstücke wenigstens teilweise, insbesondere vollständig aus Komposit gefertigt. Bei derartigen Kompositen handelt es sich um meist zahnfarbende, plastische Füllungsmaterialien, die meist aus einer Kunststoffmatrix bestehen, wobei die organische Matrix mit anorganischen Füllkörpern versetzt sein kann. Ästhetisch bieten Komposite regelmäßig den Vorteil, dass sie in mehreren Farben lieferbar sind, so dass eine optimale Anpassung an die bestehenden Zähne ermöglicht wird. Darüber hinaus können sie meist kostengünstig und mit geringem Zeitaufwand verarbeitet werden. Die Modellierung kann gegebenenfalls in einer Sitzung vorgenommen werden. Dadurch, dass es sich bei dem Komposit um ein plastisches Material handelt, welches bei der Verarbeitung noch nicht fest ist, kann es optimal an die entsprechenden räumlichen Gegebenheiten im Mund angepasst werden oder indirekt im Labor vorbereitet/verarbeitet werden.

Je nach Art der Verarbeitung beziehungsweise danach, wie die zu erfolgende Polymerisation abläuft oder in Gang gesetzt wird, können Komposite eingeteilt werden in chemisch härtende Komposite (meist als Zwei- Komponenten-System ausgebildet) oder als lichthärtende Komposite, die meist aus Einkomponentensystem bestehen. Daneben existieren auch sogenannte dualhärtende Komposite, die sowohl lichthärtend als auch chemisch härtend sind. Die Kompositmatrix besteht meist aus Kunststoffen auf Methacrylat-Basis. Als Füllstoffe kommen grundsätzlich Glas, Keramik oder Quarzteilchen in Frage. Oftmals sind diese Silan beschichtet. Die Viskosität der Kompositmaterialien kann variieren.

Die Befestigung der Verbindungsstücke am Zahn kann insbesondere adhäsiv erfolgen. Zur Befestigung wird eine Säure-Ätz-Technik angewandt, die mit oder ohne Laborschritt erfolgen kann. Bei den derartigen Ausführungsbeispielen erfolgt zunächst ein Anätzen der entsprechenden Zahnoberfläche oder Zahnersatzoberfläche mit einer Säure. Anschließend wird ein Adhäsiv aufgetragen, das die Verbindung mit der Zahnoberfläche in diesem Bereich herstellt. Zum Anätzen kann beispielsweise Phosphorsäure eingesetzt werden.

Die kombinierte Verwendung in einem Retainer von PEEK zur Herstellung des Verbindungsdrahtes und eines Komposits als Verbindungsstück besitzt den Vorteil, das PEEK in der Regel keine chemische oder mechanische Verbindung mit dem Komposit eingeht. Diese Eigenschaft kann in vorteilhafterweise genutzt werden, um eine bewegliche Lagerung des PEEK-Drahtes im Komposit zu ermöglichen. Es kann eine friktionsarme Verbindung zwischen Draht und Kompositkörper (Verbindungsstück) beziehungsweise Zahn ermöglicht werden.

Insbesondere dann, wenn die Verbindungsstücke auf der Innenseite des Zahns, d.h. auf der Palatinal- beziehungsweise Lingualfläche liegen, sind diese für andere Personen meist verdeckt und somit ästhetisch gewissermaßen neutral.

Erfindungsgemäß ist an wenigstens einem der beiden Enden des Verbindungsdrahtes ein Anschlag zur einseitigen Begrenzung der Relativbewegung zwischen Verbindungsstück und Verbindungsdraht in Längsrichtung des Drahtes vorgesehen, insbesondere einen Anschlag, der wenigstens teilweise aus Kompositmaterial besteht. Durch mechanische und chemische Veränderungen des PEEK-Drahtes kann zur Herstellung einer Endbegrenzung ein fester Verbund zwischen Komposit und PEEK-Draht hergestellt werden. Auf diese Weise können an endständigen Zähnen des Retainer-Verbunds feste Stopps befestigt werden, welche eine definierte Bogenlänge sicherstellen und Lückenbildung vorbeugen. Auf dieser Weise entsteht im Zahnraum ein Retainer-Bogen, der mehrere Zähne miteinander verbindet, wobei die Zähne entlang des Drahtes in seinem gebogenen Verlauf zunächst beweglich gelagert sind.

Erfindungsgemäß ist der Draht immer noch beweglich im endständigen Verbindungsstück gelagert, während jedoch am Ende des Drahtes ein Anschlag vorgesehen ist, der nicht durch das Verbindungsstück und dessen Lagerung gezogen werden kann, weil er zum Beispiel zu dick ausgebildet ist. In diesem Fall ist eine Bewegung des endständigen Zahns seitlich vom Retainer-Gefüge weg gehemmt, es sei denn, das gesamte Gefüge würde sich im Wesentlichen in die gleiche Richtung bewegen, was klinisch nicht auftritt.

Bewegen sich die endständigen Zähne jedoch voneinander weg nach außen, blockieren diese sich in beiden Fällen gegenseitig durch die angebrachten Endstopps. Auch die Bewegung senkrecht zur Verlaufsrichtung des Drahtes ist insofern eingeschränkt, dass ein Zahn nicht beliebig seitlich abdriften kann, ohne dass das Gesamtgefüge blockiert. In einem gewissen Maße ist dies jedoch möglich, und auch in Längsrichtung des Drahtes kann sich ein Zahn prinzipiell bewegen, zumindest soweit, wie es der benachbarte Zahn auf Grund seiner Ausdehnung, beispielsweise auf Grund seiner Ausdehnung seiner Zahnkrone ermöglicht. In jedem Fall wird den vom Retainer-Verbund betroffenen Zähnen jedoch eine gewisse Bewegungsmöglichkeit eingeräumt, sodass anderweitige Kompensationen der Einengung, die einen Retainer darstellt nicht ohne Weiteres nötig sind, sondern zunächst einmal eine Bewegung dieser Zähne in einem physiologischen Maß erfolgen kann.

Ein Retainer gemäß der Erfindung kann insbesondere im Frontzahnbereich eingesetzt werden, ist jedoch in der Regel nicht auf diesen beschränkt.

Zudem kann die Beweglichkeit dadurch angepasst werden, wie groß die Öse in einem Verbindungsstück ausgebildet ist, indem ein Verbindungsdraht gelagert wird. Je nachdem kann die Größe der Öse und somit die Größe des Spiels für eine Bewegung senkrecht zum Verlauf des Drahtes eingestellt werden. Eine Beweglichkeit von ca. 0,2 mm (Millimeter), die etwa der natürlichen Zahnbeweglichkeit im Zahnfach entspricht, ist grundsätzlich einstellbar; die natürliche Beweglichkeit bleibt somit durch die Gleiteigenschaften innerhalb des Gefüges entlang der Längsachse sowie durch die Biegsamkeit des Drahtes in allen drei Raumrichtungen erhalten.

Insbesondere können bei einem entsprechenden Herstellungsverfahren für einen Retainer folgende Verfahrensschritte durchgeführt werden: Formen wenigstens eines, insbesondere zweier Verbindungsstücke und Hindurchführen beziehungsweise Hindurchstecken eines Verbindungsdrahtes durch wenigstens zwei Verbindungsstücke.

Je nachdem, wie das Kompositmaterial aushärtet und wie die Polymerisation stattfindet, kann ein schichtweises Aufbauen eines Verbindungsstückes vorgesehen sein, wobei der Verbindungsdraht in wenigstens eines der Verbindungsstücke während des Aufbauens eingelegt werden kann, sodass das jeweilige Verbindungsstück den Verbindungsdraht an dieser Stelle sodann umschließt. Diese Vorgehensweise kann insbesondere bei lichthärtenden Kompositen verwendet werden.

Der Kompositaufbau kann grundsätzlich sehr präzise und auch sehr verbindungsstark ausgeführt werden.

Bei einem im Gesamten chemisch aushärtenden Material kann der Draht gegebenenfalls im plastischen Zustand auch durchgesteckt werden.

In der Regel können daher bei einem Ausführungsbeispiel der Erfindung die Verbindungsstücke vollständig aus Komposit gefertigt werden. Zum einen kann somit ein Komposit mit einer Farbe verwendet werden, die dem umgebenden Zahnmaterial entspricht, sodass das Verbindungsstück selbst im Mundraum unauffällig ist. Zum anderen besitzt das Kompositmaterial in Bezug auf den PEEK-Draht oder einen anderen Kunststoffdraht in der Regel die gewünschten Reibungseigenschaften, sodass die gewünschte bewegliche Lagerung ohne Weiteres möglich ist.

Denkbar ist aber auch, dass ein Verbundmaterial für ein Verbindungsstück verwendet wird, das nur teilweise Kompositmaterial verwendet. Insbesondere kann gegebenenfalls der Endstopp so gefertigt sein, dass er an einem anderen, in das Kompositmaterial eingebrachten Werkstoff fest haftet. Grundsätzlich ist es auch denkbar, dass der eigentliche, das lagerbildende Teil ein anderes Material aufweist, das besondere, gewünschte Reibeigenschaften mit dem Verbindungsdraht besitzt. Ferner ist es denkbar, dass auch Materialien oder Werkstoffe zur verstärkenden Halterung am Zahn zusätzlich eingesetzt werden. Vorzugsweise wird der Verbindungsdraht wenigstens teilweise, insbesondere vollständig aus Kunststoff, insbesondere aus Polyetheretherketon gefertigt. Es ist aber auch denkbar, das im Endbereich andere Materialien verwendet werden um einen Endstopp beziehungsweise einen Anschlag zu realisieren. Auch Beschichtungen des Drahtes sind grundsätzlich denkbar. Ansonsten können bei Ausführungsformen zum Herstellungsverfahren gemäß der Erfindung die bereits genannten Techniken eingesetzt werden, beispielsweise Lichthärtung oder die Verwendung eines chemisch härtenden Komposits die Ausbildung eines Endanschlags am Verbindungsdraht, insbesondere durch Erhitzen sowie eine chemische Behandlung des PEEK-Drahtes, um eine Reaktion mit dem Komposit zu erwirken.

Ferner kann zur Herstellung einer Zahnverbindung auch das Auftragen eines Adhäsivs auf das Verbindungsstück vorgesehen sei.

### Ausführungsbeipiele

Ein Ausführungsbeispiel der Erfindung ist in den Zeichnungen dargestellt und wird nachstehend unter Angabe weiterer Einzelheiten und Vorteile näher erläutert.

Im Einzelnen zeigen:
- Figur 1: eine schematische Darstellung eines an einer Zahngruppe angebrachten Retainers gemäß der Erfindung, sowie
- Figur 2: eine schematische Darstellung eines Zahns mit daran angebrachtem Verbindungsstück im Palatinalbereich.

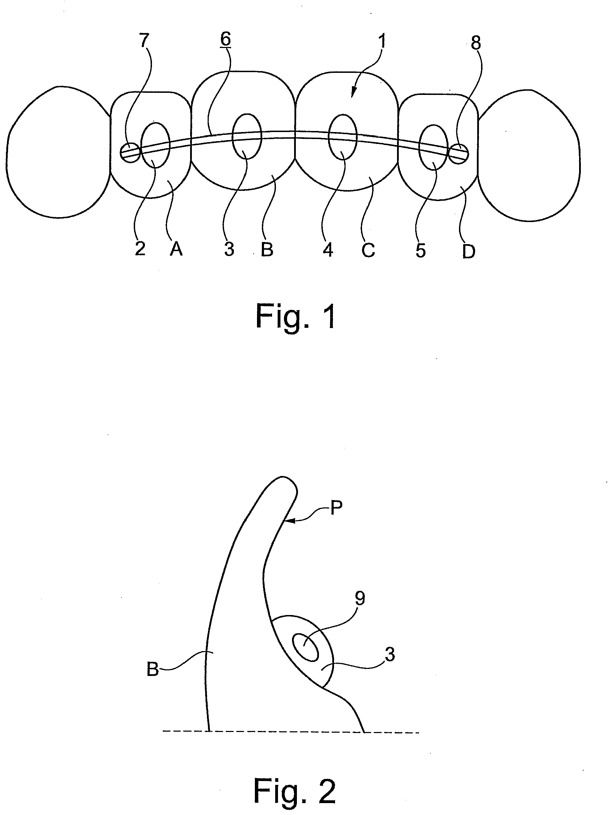

Figur 1 zeigt einen Retainer 1 mit Verbindungsstücken 2, 3, 4, 5. Durch die Verbindungsstücke 2 bis 5 ist ein Verbindungsdraht 6 hindurchgeführt und beweglich gelagert. An den beiden Enden des Verbindungsdrahtes 6 befinden sich jeweils Endanschläge 7, 8. Die Verbindungsstücke selbst sind im Palatinalbereich der Zähne a, b, c, d angebracht. Bei dem Draht 6 handelt es sich um einen Draht aus PEEK. An den Enden des Drahtes 6 sind Endanschläge in Form von Kugeln oder Verdickungen 7, 8 angebracht. Es bestehen grundsätzlich zwei Möglichkeiten, nämlich diese Anschläge 7, 8 mit dem jeweiligen Kompositmaterial des entsprechenden Verbindungsstücks 2, 5 zu einer festen Verbindung zusammenwirken zu lassen, oder aber eine Beweglichkeit des Drahtes 6 beizubehalten, sodass sich der Zahn lediglich bis zum Anschlag bewegen kann. Der Zahn A könnte sich in Figur 1 zum Beispiel weiter nach links bewegen, es sei denn, insbesondere der Zahn D kann keinerlei Bewegung nach links ausüben.

Wenn der Zahn B am Anschlag 8 über das Verbindungsstück 5 anliegt, ist die Bewegungsfreiheit des Zahns A nach links grundsätzlich eingeschränkt. Allenfalls ist durch etwaiges Spiel des Drahtes 6 infolge der Krümmung über die Länge des gesamten Retainer-System noch eine eingeschränkte Bewegung möglich. Die Zähne B und C können sich über die bewegliche Lagerung des Drahtes 6 in den Verbindungsstücken 3, 4 im gewissen Maße seitlich nach links oder rechts bewegen, zumindest sofern die benachbarten Zähne dies noch erlauben. Dennoch sind die Bewegungsmöglichkeiten der Zähne A bis D soweit eingeschränkt, dass die vorgenommene kieferorthopädische Maßnahme erhalten bleibt und die Zahnfehlstellung erfolgreich korrigiert bleibt.

Figur 2 zeigt eine Seitenansicht eines Zahnes, zum Beispiel des Zahnes B mit einem auf dessen Palatinalseite P angebrachten Verbindungsstück 3. Das Verbindungsstück wiederum weist eine Öse 9 auf, deren Querschnitt oval ausgebildet ist. Ob als Draht kann ein ovaler Draht 6 verwendet werden, der in der Öse 9 gelagert ist. Der Draht kann so gelagert sein, dass er in der Öse 9 zwar mit Spiel gelagert ist, beispielsweise noch eine Bewegungsmöglichkeit von etwa 0,2 mm hat, die den natürlichen Bewegungsmöglichkeiten des Zahnes im Zahnfach entspricht, wodurch der Zahn seine natürliche Bewegung immer noch ausführen kann, trotz des angebrachten Retainers. Dennoch kann sich der Draht 6 in der Öse 9 nicht drehen, sondern wird durch seine ovale Form blockiert.

Je nachdem, ob die Verbindungsstücke im Bereich des Oberkiefers oder des Unterkiefers angeordnet sind, können diese Größen von ca. 2 mm bis 5 mm, insbesondere 2,5 mm bis 5 mm aufweisen. Bei den Ausführungsformen gemäß Figur 1 und Figur 2 beträgt die Breite in horizontaler Richtung ca. 2,5 mm bei einer Anwendung im Unterkiefer und ca. 3,5 mm bei einer Anwendung im Oberkiefer. Die Länge beträgt etwa 3,5 mm im Bereich des Unterkiefers und 4 mm im Bereich des Oberkiefers. Als Drahtdurchmesser kommt ein Durchmesser von insbesondere 0,5 mm bis 1 mm in Frage, beispielsweise bei ovaler Form von 0,54 mm am kürzesten Querschnitt und 0,75 mm an der längsten Querschnittsseite. Die Anschlagskugeln 7, 8 besitzen einen Durchmesser von ca. 1 mm.

Besonders vorteilhaft kann ein Retainer gemäß der Erfindung im Bereich der Frontzähne wie folgt verwendet werden: Der Retainer wird von Eckzahn zu Eckzahn (in der Regel mit 6 Verbindungsstücken an 6 Zähnen) eingesetzt.

Durch Einbringen eines Nickel-Titan-Drahtes bei einem Ausführungsbeispiel der Erfindung kann der Retainer auch in einer Malokklusionssituation, wenn noch kleinere Fehlstellungen vorhanden sind, eingesetzt werden. Durch die Rückstellkraft des Nickel-Titan-Drahtes, also eine Art Memory-Effekt, wird auf diese Weise eine Korrektur der Zahnfehlstellung erreicht.

### Bezugszeichenliste:

- 1: Retainer
- 2: Verbindungsstück
- 3: Verbindungsstück
- 4: Verbindungsstück
- 5: Verbindungsstück
- 6: PEEK-Draht
- 7: Anschlag
- 8: Anschlag
- 9: Öse

- A: Zahn
- B: Zahn
- C: Zahn
- D: Zahn

- P: Palatinalseite

## Patentansprüche

1. Retainer (1) zum Erhalt der während der kieferorthopädischen Therapie erzielten Frontzahnstellung mit wenigstens zwei Verbindungsstücken (2, 3, 4, 5) zur Befestigung des Retainers (1) an jeweils einem der Zähne (A, B, C, D), wobei an den beiden endständigen Zähnen (A, D) jeweils eines der Verbindungsstücke als endständiges Verbindungsstück (2, 5) befestigbar ist, und mit einem Verbindungsdraht (6) zur Herstellung einer Verbindung zwischen den Zähnen (A, B, C, D) und/oder zur Ausbildung einer Zwangsbedingung zur Einschränkung der Bewegungsmöglichkeiten der verbundenen Zähne (A, B, C, D), wobei der Verbindungsdraht (6) in wenigstens einem der Verbindungsstücke (A, B, C, D) beweglich gelagert ist, wobei der Verbindungsdraht (6) wenigstens teilweise aus Kunststoff gefertigt ist und wenigstens eines der Verbindungsstücke (2, 3, 4, 5) wenigstens teilweise aus Komposit gefertigt ist, wobei der Verbindungsdraht (6) teilweise oder vollständig aus Polyetheretherketon gefertigt ist, wobei an wenigstens einem der beiden Enden des Verbindungsdrahts (6) ein Anschlag (7, 8) zur einseitigen Begrenzung der Relativbewegung zwischen wenigstens einem der endständigen Verbindungsstücke (2, 5) und dem Verbindungsdraht (6) in Längsrichtung des Drahts vorgesehen ist, wobei wenigstens eines der Verbindungsstücke (2, 3, 4, 5) den Verbindungsdraht (6) senkrecht zur Längsrichtung des Verbindungsdrahtes (6) wenigstens teilweise, insbesondere vollständig umgibt und/oder vollständig am Verbindungsdraht entlang dessen Umfangs anliegt, indem insbesondere eine Öse (9) zur Lagerung des Verbindungsdrahtes (6) vorgesehen ist, sodass vorzugsweise eine Relativbewegung zwischen Verbindungsdraht (6) und dem jeweiligen Verbindungsstück (2, 3, 4, 5) in Längsrichtung ermöglicht und eine Relativbewegung senkrecht zur Längsrichtung vollständig blockiert oder nur innerhalb einer bestimmten Fläche zugelassen wird, wobei der Verbindungsdraht beweglich in wenigstens einem der endständigen Verbindungsstücke gelagert ist und der Anschlag nicht durch das endständige Verbindungsstück und dessen Lagerung gezogen werden kann.

2. Retainer (1) nach Anspruch 1, **dadurch gekennzeichnet, dass** der Verbindungsdraht (6) in Längsrichtung starr und/oder ein Elastizitätsmodul von mindestens 1000 MPa, vorzugsweise mindestens 3000 MPa aufweist.

3. Retainer (1) nach einem der vorgenannten Ansprüche, **dadurch gekennzeichnet, dass** wenigstens eines der Verbindungsstücke (2, 3, 4, 5) adhäsiv, insbesondere mit einer Säure-Ätz-Technik durch Anätzen mit einer Säure und anschließendem Auftragen eines Adhäsivs mit der Zahnoberfläche verbindbar ist.

4. Retainer (1) nach einem der vorgenannten Ansprüche, **dadurch gekennzeichnet, dass** der Verbindungsdraht (6) senkrecht zur Längsrichtung biegeschlaff ausgebildet ist.

5. Retainer (1) nach einem der vorgenannten Ansprüche, **dadurch gekennzeichnet, dass** der Verbindungsdraht (6) vollständig aus Kunststoff gefertigt ist.

6. Retainer (1) nach einem der vorgenannten Ansprüche, **dadurch gekennzeichnet, dass** wenigstens eines der Verbindungsstücke (2, 3, 4, 5) vollständig aus Komposit gefertigt ist.

## Claims

1. Retainer (1) for maintaining the front teeth positioning achieved during orthodontic therapy, having at least two connection pieces (2, 3, 4, 5) for fastening the retainer (1) on one tooth in each case (A, B, C, D), it being possible to fasten to each of the two terminal teeth (A, D) one of the connection pieces as terminal connection piece (2, 5), and having a connection wire (6) for establishing a connection among the teeth (A, B, C, D) and/or for forming a constraint to restrict the movement capabilities of the connected teeth (A, B, C, D), wherein the connection wire (6) is movably mounted in at least one of the connection pieces (A, B, C, D), the connection wire (6) being at least partly made of plastic and at least one of the connection pieces (2, 3, 4, 5) being at least partly made of composite, the connection wire (6) being partly or entirely made of polyether ether ketone, at at least one of the two ends of the connection wire (6) a stop (7, 8) being provided for the one-sided limitation of the relative movement between at least one of the terminal connection pieces (2, 5) and the connection wire (6) in the longitudinal direction of the wire, at least one of the connection pieces (2, 3, 4, 5) surrounding the connection wire (6) perpendicular to the longitudinal direction of the connection wire (6), at least in part, especially in full, and/or lying completely on the connection wire along its circumference, by especially an eyelet (9) being provided for mounting the connection wire (6), and so preferably a relative movement between connection wire (6) and the particular connection piece (2, 3, 4, 5) in the longitudinal direction is allowed and a relative movement perpendicular to the longitudinal direction is completely blocked or is permitted only within a specific area, the connection wire being movably mounted in at least one of the terminal connection pieces and the stop not being able to be pulled through the terminal connection piece and its mounting.

2. Retainer (1) according to Claim 1, **characterized in that** the connection wire (6) is rigid in the longitudinal direction and/or has an elasticity modulus of at least 1000 MPa, preferably at least 3000 MPa.

3. Retainer (1) according to any of the preceding claims, **characterized in that** at least one of the connection pieces (2, 3, 4, 5) is connectable to the tooth surface in an adhesive manner, especially by means of an acid etching technique by etching with an acid and subsequent application of an adhesive.

4. Retainer (1) according to any of the preceding claims, **characterized in that** the connection wire (6) is designed to be nonrigid perpendicular to the longitudinal direction.

5. Retainer (1) according to any of the preceding claims, **characterized in that** the connection wire (6) is entirely made of plastic.

6. Retainer (1) according to any of the preceding claims, **characterized in that** at least one of the connection pieces (2, 3, 4, 5) is entirely made of composite.

## Revendications

1. Ancrage (1) servant à conserver la position des dents frontales obtenue pendant le traitement orthodontique, comprenant au moins deux pièces de liaison (2, 3, 4, 5) servant à la fixation de l'ancrage (1) respectivement à l'une des dents (A, B, C, D), l'une des pièces de liaison pouvant respectivement être fixée en tant que pièce de liaison terminale (2, 5) aux deux dents terminales (A, D), et comprenant un fil de liaison (6) servant à établir une liaison entre les dents (A, B, C, D) et/ou à former une condition forcée servant à restreindre les possibilités de mouvement des dents (A, B, C, D) liées, le fil de liaison (6) étant monté mobile dans au moins l'une des pièces de liaison (A, B, C, D), le fil de liaison (6) étant au moins partiellement fabriqué en matière plastique et au moins l'une des pièces de liaison (2, 3, 4, 5) étant au moins partiellement fabriquée en composite, le fil de liaison (6) étant partiellement ou entièrement fabriqué en polyétheréthercétone, une butée (7, 8) servant à la limitation unilatérale du mouvement relatif entre au moins l'une des pièces de liaison terminales (2, 5) et le fil de liaison (6) dans la direction longitudinale du fil se trouvant à au moins l'une des deux extrémités du fil de liaison (6), au moins l'une des pièces de liaison (2, 3, 4, 5) entourant au moins partiellement, notamment entièrement le fil de liaison (6) perpendiculairement à la direction longitudinale du fil de liaison (6) et/ou reposant entièrement contre le fil de liaison le long de son pourtour, notamment du fait de la présence d'un oeillet (9) servant à supporter le fil de liaison (6), de sorte que, de préférence, un mouvement relatif entre le fil de liaison (6) et la pièce de liaison (2, 3, 4, 5) respective dans la direction longitudinale soit possible et un mouvement relatif perpendiculairement à la direction longitudinale soit complètement bloqué ou ne soit permis qu'à l'intérieur d'une surface définie, le fil de liaison étant monté mobile dans au moins l'une des pièces de liaison terminales et la butée ne pouvant pas être tirée à travers la pièce de liaison terminale et son support.

2. Ancrage (1) selon la revendication 1, **caractérisé en ce que** le fil de liaison (6) est rigide dans la direction longitudinale et/ou possède un module d'élasticité d'au moins 1000 MPa, de préférence d'au moins 3000 MPa.

3. Ancrage (1) selon l'une des revendications précédentes, **caractérisé en ce qu'**au moins l'une des pièces de liaison (2, 3, 4, 5) est adhésive, notamment peut être reliée à la surface de la dent par une technique d'attaque acide par mordançage avec un acide et ensuite application d'un adhésif.

4. Ancrage (1) selon l'une des revendications précédentes, **caractérisé en ce que** le fil de liaison (6) est configuré souple en flexion perpendiculairement à la direction longitudinale.

5. Ancrage (1) selon l'une des revendications précédentes, **caractérisé en ce que** le fil de liaison (6) est fabriqué entièrement en matière plastique.

6. Ancrage (1) selon l'une des revendications précédentes, **caractérisé en ce qu'**au moins l'une des pièces de liaison (2, 3, 4, 5) est fabriquée entièrement en composite.
